# DEMANDE DE BREVET EUROPEEN

(11) **EP 3 385 101 A1**
(43) Date de publication de la demande: **10.10.2018**
(21) Numéro de dépôt: 18165386.6
(22) Date de dépôt: 03.04.2018
(51) Int. Cl.: B60H 3/02

(54) **SYSTÈME DE CLIMATISATION POUR VÉHICULE AUTOMOBILE À SÉCHEUR RÉGÉNÉRABLE ET PROCÉDÉ DE COMMANDE D'UN TEL SYSTÈME**

(30) Priorité: 03.04.2017 FR 1752827
(71) Demandeur: RENAULT s.a.s., 92100 Boulogne-Billancourt (FR)
(72) Inventeur: OLIVIER, GERARD, 78380 BOUGIVAL (FR); LE NAIN, EDUIN, 91120 PALAISEAU (FR); DEL FABRO, LAETITIA, 78180 MONTIGNY LE BRETONNEUX (FR)

(57) **Abrégé**

L'invention porte sur un système de climatisation (1) pour véhicule automobile comprenant
- un calculateur capable de déterminer un taux de recyclage,
- un boîtier de climatisation et de chauffage comprenant des moyens de contrôle et de pilotage de l'état de l'air dans l'habitacle,
- un sécheur (2) comprenant un matériau adsorbant régénérable, un volet permettant de doser la quantité d'air traversant le sécheur (2), et au moins un moyen de régénération (7) pour chauffer et désorber le matériau adsorbant et l'eau qu'il contient,

## Description

La présente invention a pour objet un sécheur régénérable, en particulier un sécheur d'air par adsorption, destiné à équiper un système de climatisation, notamment pour véhicule automobile, ainsi qu'un procédé de commande d'un tel système.

Le but de l'invention est de proposer un système de climatisation capable de sécher l'air d'un habitacle automobile par adsorption.

L'adsorption consiste à utiliser un matériau adsorbant tel que par exemple une zéolite, un gel de silice, un matériau de la famille des MOF (« Métal Organic Framework », en anglais) ou d'autres matériaux. Ce matériau est capable d'adsorber une partie des molécules d'eau contenues dans l'air.

La réaction d'adsorption est exothermique c'est-à-dire qu'elle produit de la chaleur qui est transmise en partie à l'air qui traverse le matériau.

Lorsque le matériau est saturé et n'a plus de capacité pour retenir l'eau il doit être régénéré. Il peut également être régénéré avant d'être saturé.

La régénération est réalisée en chauffant le matériau ou bien l'air qui traverse le matériau afin d'évaporer l'eau. L'air qui traverse le matériau pour le régénérer, ou désorber, est alors chauffé et humidifié et est, dans le cadre d'une intégration dans un véhicule automobile, de préférence renvoyé vers l'extérieur.

Pendant le séchage de l'air, ce système ne consomme pas d'énergie. Il a la particularité de dégager de la chaleur pendant la phase d'adsorption et de nécessiter de la chaleur pendant la phase de régénération.

On connaît le séchage de l'air d'un habitacle automobile en utilisant l'évaporateur du système de climatisation qui refroidit l'air à destination de l'habitacle tout en le séchant, mais l'évaporateur consomme alors un surplus d'énergie.

Le séchage passif par adsorption n'est pas utilisé dans l'automobile. Sa régénération est l'une de ses principales contraintes.

On connaît par les documents FR2848500 et FR2905311 un filtre à gaz régénérable pour un véhicule automobile. Le filtre est régénéré en prélevant de l'air dans l'habitacle, et en le faisant passer à travers le filtre. On envoie ensuite l'air à l'extérieur du véhicule via un conduit de dérivation, ou « by-pass » en anglais.

On connaît par le document US5566880 l'intégration d'un sécheur dans le boîtier de chauffage d'un véhicule automobile en aval du volet de recyclage, et en amont du système de chauffage.

Le conduit de dérivation permet à l'air de contourner le sécheur.

Dans ce document, un moyen de régénération additionnel est prévu pour régénérer le sécheur et est disposé en amont ou autour du sécheur.

Les documents EP2143574, EP2075148 et US20100107656 décrivent un sécheur à adsorption possédant une fonction de régénération par électrification pour chauffer l'élément sorbant du sécheur, une fonction d'inversion des flux d'air, et une fonction de sorties distinctes de l'air séché et de l'air humidifié.

Le document FR2780144 décrit une installation de chauffage-climatisation pour véhicule automobile comprenant un sécheur pour sécher l'évaporateur après utilisation du mode climatisation afin d'éviter le phénomène d'embuage en mode pompe à chaleur ou le développement de micro-organismes, sources d'odeurs. Le sécheur est placé en parallèle avec l'évaporateur et le ventilateur pour sécher l'évaporateur en boucle fermée pendant l'arrêt du véhicule. La régénération est réalisée à l'arrêt du véhicule. Le sécheur est traversé par la conduite chaude qui alimente l'aérotherme de chauffage afin de pouvoir chauffer le matériau pendant la régénération. La régénération peut également être réalisée au démarrage du véhicule. Le séchage peut également être réalisé en roulage permettant ainsi, comme on le comprend, de sécher également l'air recyclé ou l'air extérieur.

En mode chauffage, l'utilisation du sécheur limite toutefois le débit d'air envoyé vers l'habitacle et impacte le confort thermique. En mode régénération en roulant, le débit d'air envoyé vers l'habitacle est également restreint.

On connaît par le document US5697223 un sécheur qui prend de l'air de l'habitacle pour le sécher lorsque l'on utilise le système de pompe à chaleur afin d'éviter l'embuage des vitres. Le sécheur est ensuite régénéré grâce à une source chaude, par exemple une résistance électrique, placée en amont du sécheur. Le boîtier contenant le sécheur est situé dans l'habitacle et est indépendant du boitier contenant le système de climatisation - chauffage.

Dans ce document, le sécheur ne prend pas en compte l'air humidifié par la pompe à chaleur lors de son démarrage. Il est traversé par un débit d'air prélevé dans l'habitacle, ce qui induit une inertie assez longue pour assurer efficacement que les vitres ne seront pas embuées. La réduction de l'embuage grâce au sécheur est alors inefficace dans un grand nombre de situations où la pompe à chaleur est mise en route alors que le mode climatisation a été utilisé dans un mode précédent.

Les documents EP2511116, EP2614973, et EP2881274 proposent un module prélevant de l'air de l'habitacle et contenant un sécheur pour sécher, si besoin, l'air alimentant le pare-brise afin de lutter contre les risques d'embuage. La régénération est réalisée avec un chauffage électrique placé en amont du sécheur. L'air humidifié est alors rejeté vers l'extérieur. Le brevet décrit également plusieurs mises en forme du matériau adsorbant dans le sécheur.

Le brevet JP5083035 propose un sécheur en deux parties, intégré dans un module logé dans l'habitacle et destiné à envoyer de l'air séché vers le pare-brise ou vers la tête des passagers avant.

On comprend, à la lecture du document US5509275, qu'un système de climatisation et de chauffage comporte un sécheur en forme de roue tournant autour d'un axe, et dont une partie sert à sécher pendant que l'autre partie est régénérée à l'aide d'une source chaude.

Le document EP0803685 décrit un matériau adsorbant apte à sécher et réduire les composés organiques volatiles.

L'invention concerne un système de climatisation avec un séchage de l'air par adsorption au moyen d'un matériau adsorbant de type zéolite, gel de silice, ou MOF.

Ce système est régénérable par désorption en réchauffant le matériau adsorbant et l'eau qu'il contient.

L'invention est principalement dédiée aux véhicules électriques dans le but de gagner en consommation mais trouve aussi une application avantageuse dans les phases de démarrage des véhicules thermiques, et plus généralement à tout type de véhicule dans le but de réduire les risques d'embuage.

Le recyclage de l'air de l'habitacle dans le boîtier de climatisation - chauffage du système de climatisation permet d'améliorer l'efficacité énergétique et réduire la consommation du système de climatisation. Par exemple, le gain potentiel en mode climatisation est compris entre 20% et 60% de la consommation de la climatisation, notamment pour réduire la variabilité de l'autonomie et augmenter l'autonomie d'un véhicule électrique ou d'un véhicule électrifié en mode électrique.

Mais l'utilisation du recyclage de l'air présente des contraintes liées au recyclage de l'air qui est difficile à maîtriser, plus particulièrement en mode chauffage, et qui est contraint par les risques d'humidité qui peuvent entraîner l'embuage des vitres.

Le recyclage de l'air est également limité par les risques d'augmentation trop importante du taux de CO2 dans l'habitacle.

Ces risques en CO2 et d'embuage sont liés principalement à la présence des occupants dans l'habitacle. Il est généralement préconisé un débit d'air neuf extérieur de l'ordre de 20 à 30 m3/h par passager pour maintenir le taux de CO2 en dessous de 1000 ppm.

De plus, le recyclage de l'air avec une entrée de recyclage traditionnellement située à l'avant de l'habitacle peut dégrader le confort thermique des passagers dans la zone arrière de l'habitacle.

On remarque, sur certains véhicules, que l'activation du recyclage d'air occasionne un risque d'envoi direct d'air extérieur vers l'habitacle à contre sens par la branche de recyclage d'air à cause de la vitesse véhicule et des pressions dynamiques engendrées.

Le pilotage du recyclage d'air occasionne parfois une variation du bruit en provenance du boîtier de climatisation - chauffage avec une augmentation du niveau sonore induit par l'ouverture du volet et la remontée des fluctuations de pression engendrées, notamment par le pulseur à travers la branche de recyclage d'air.

Par ailleurs, sur les véhicules électrifiés et plus particulièrement les véhicules électriques, la consommation en mode chauffage peut être très élevée.

De plus, le mode chauffage est très utilisé dans beaucoup de contrées géographiques.

En conséquence, la présente invention apporte des solutions permettant d'optimiser le taux de recyclage de l'air à une valeur la plus élevée tout en se protégeant efficacement contre les risques d'embuage et en limitant les autres contraintes listées plus haut.

Le séchage de l'air destiné à l'habitacle est une solution qui permet de réduire la masse d'eau dans l'air et d'accepter un taux de recyclage de l'air habitacle plus élevé.

Une solution passive de séchage de l'air consiste à utiliser le principe physique de l'adsorption.

Cette réaction d'adsorption est exothermique et entraîne donc un réchauffage de l'air séché qui est bénéfique en mode chauffage.

En mode chauffage, le séchage de l'air par adsorption est donc particulièrement adapté puisqu'il permet, sans puiser sur l'énergie disponible dans le véhicule, d'augmenter le taux de recyclage de l'air et de chauffer l'air grâce à la réaction exothermique.

En mode climatisation, la climatisation utilise un échangeur froid comprenant l'évaporateur. Celui-ci, dans le cas d'un système de boucle à compression de vapeur, refroidit l'air tout en condensant une partie de l'humidité de l'air, notamment l'humidité générée par les occupants via le recyclage d'air.

Le séchage passif de l'air par adsorption peut alors constituer une contrainte bien qu'il réduise l'énergie latente de l'échangeur froid car il réchauffe l'air et augmente l'énergie sensible dépensée dans l'échangeur froid pour refroidir l'air. Le bilan énergétique présente alors un intérêt restreint.

Dans ce contexte, le séchage à adsorption est particulièrement intéressant lors des modes chauffage pour réduire la consommation et augmenter l'autonomie des véhicules électrifiés et principalement des véhicules électriques. Il est utilisé pour améliorer le recyclage d'air lorsque celui-ci est limité par un risque d'embuage.

Le séchage peut ne pas être utilisé, ou être utilisé jusqu'à atteindre une limite de taux de recyclage sans la dépasser et en réduisant l'hygrométrie dans l'habitacle. L'arrivée d'air neuf sert alors à oxygéner suffisamment l'habitacle. Dans ce cas, le séchage permet de réduire l'hygrométrie dans l'habitacle et de s'écarter des risques d'embuage des vitres.

En mode climatisation, il est préférable de ne pas l'utiliser afin de ne pas le saturer trop rapidement et d'augmenter ainsi son cycle d'utilisation au bout duquel il doit être régénéré.

Le séchage à adsorption peut également être utilisé simplement pour prévenir l'embuage. Ceci est intéressant alors pour tous les types de véhicules (véhicules thermiques et véhicules électrifiés). Le système est utilisé lorsque un risque d'embuage est détecté c'est-à-dire lorsque des capteurs détectent que l'on approche de conditions favorisant l'apparition de buée sur les vitres.

Le séchage de l'air permet également dans ce cas de limiter l'énergie consommée pour désembuer ou prévenir l'embuage.

Lorsque le risque d'embuage n'est pas détecté, il est préférable de ne pas utiliser le séchage afin de ne pas saturer trop rapidement la matériau adsorbant et d'augmenter ainsi son cycle d'utilisation au bout duquel il doit être régénéré.

Le sécheur est moins utilisé et le cycle d'utilisation est plus long, ou son dimensionnement est plus réduit que dans le cas précédent d'optimisation du recyclage d'air pour réduire la consommation. Le séchage est utilisé dans ce cas avant tout pour des raisons de visibilité et de sécurité et éventuellement, notamment dans le cas des véhicules électrifiés, pour des raisons d'économie d'énergie.

Le séchage à adsorption peut également être associé à l'utilisation d'une boucle de climatisation réversible avec un mode de chauffage par une pompe à chaleur. Si un même échangeur est utilisé en mode climatisation pour refroidir l'air et en mode chauffage par la pompe à chaleur pour réchauffer l'air, il y a un risque de provoquer l'embuage rapide et complet des vitres dès le démarrage de la pompe à chaleur.

Ce phénomène peut intervenir par exemple en saison intermédiaire lorsque l'on utilise la climatisation pour refroidir l'air et que l'on utilise la pompe à chaleur quelques heures ou quelques jours après pour réchauffer l'air. A la fin du mode climatisation, une couche d'eau provenant de la condensation de l'humidité reste sur la surface de l'échangeur.

A la mise en route de la pompe à chaleur, cette eau est très rapidement évaporée et entraînée dans le flux d'air puis se condense sur les surfaces froides des vitres de l'habitacle en formant une couche de buée qui est problématique pour des raisons de manque de visibilité et d'insécurité.

Cette utilisation du séchage d'air concerne les véhicules utilisant un échangeur capable de produire du froid ou du chaud.

En général, ce type d'échangeur concerne par exemple les boucles frigorifiques réversibles fonctionnant en mode climatisation et pompe à chaleur et délivrant le froid et le chaud sur le même échangeur.

Lorsque l'échangeur a été utilisé pour produire du froid et que l'on souhaite l'utiliser pour produire du chaud, le séchage placé en aval de l'échangeur permet au démarrage du mode chauffage de retenir une partie de l'humidité de l'air chaud chargé avec l'eau qui s'était déposée sur l'échangeur pendant le mode climatisation.

Après quelques secondes, lorsque l'échangeur s'est asséché, le sécheur entre dans une phase plus longue de régénération en utilisant l'air chauffé par l'échangeur qui cette fois-ci se charge progressivement avec l'humidité du sécheur sans risquer d'embuer les vitres. L'humidité de l'échangeur s'est ainsi dissipée dans la durée grâce au sécheur. Pour faciliter cette phase de régénération, un moyen de régénération peut être utilisé en complément pour accroître la température de désorption du matériau.

Les véhicules concernés sont principalement les véhicules électrifiés et particulièrement les véhicules électriques comprenant une pompe à chaleur limitant avantageusement les pertes énergétiques en mode chauffage. Les autres types de véhicule peuvent également être concernés.

Au vu de ce qui précède, l'invention porte sur un système de climatisation pour véhicule automobile comprenant
- un calculateur capable de déterminer un taux de recyclage,
- un boitier de climatisation et de chauffage comprenant des moyens de contrôle et de pilotage de l'état de l'air dans l'habitacle, et
- un sécheur comprenant un matériau adsorbant régénérable, un volet permettant de doser la quantité d'air traversant le sécheur, et au moins un moyen de régénération pour chauffer et désorber le matériau adsorbant et l'eau qu'il contient.

Le volet du sécheur peut être piloté par le calculateur.

Selon un mode de réalisation, les moyens de contrôle et de pilotage de l'état de l'air dans l'habitacle comprennent notamment en
- un volet de recyclage d'air apte à doser le débit d'air provenant de l'extérieur, piloté par le calculateur,
- une branche de recyclage d'air conduisant l'air en amont du volet de recyclage d'air,
- une branche d'entrée d'air neuf extérieur conduisant l'air en amont du volet de recyclage,
- une branche commune air recyclé - air neuf extérieur conduisant l'air en aval du volet de recyclage et en amont des ouvertures pratiquées dans l'habitacle du véhicule.
- une branche chaude en communication fluidique avec la branche commune air recyclé - air neuf extérieur au moyen d'une ouverture pratiquée à l'interface avec celle-ci,
- un volet de mixage capable d'obturer partiellement ou totalement l'ouverture pratiquée entre la branche commune air recyclé - air neuf extérieur et la branche chaude,
- un pulseur dans la branche commune air recyclé - air neuf extérieur, et
- un évaporateur dans la zone commune air recyclé-air neuf extérieur.

Selon un autre mode de réalisation, le boîtier de climatisation et de chauffage comprend un conduit de dérivation reliant un point en aval du pulseur 8 à la zone d'entrée d'air extérieur.

Selon un autre mode de réalisation, la boîte de climatisation et de chauffage comprend un conduit de dérivation reliant l'amont du volet de distribution d'air vers le pare-brise du véhicule à la zone d'entrée d'air extérieur.

Selon un autre mode de réalisation, le boîtier de climatisation et de chauffage comprend un conduit de dérivation reliant un point en aval du pulseur à une sortie directe vers l'extérieur.

Selon un autre mode de réalisation, le boîtier de climatisation et de chauffage utilise comme conduit de dérivation vers l'extérieur la sortie existante située sous l'échangeur évaporateur et qui renvoie les condensats vers l'extérieur.

Selon un autre mode de réalisation, le sécheur est intégré dans la branche de recyclage d'air du boitier de climatisation et de chauffage.

Selon un autre mode de réalisation, le sécheur est intégré dans la branche d'entrée d'air neuf extérieur du boitier de climatisation et de chauffage.

Selon un autre mode de réalisation, le sécheur est situé dans la branche commune air recyclé - air neuf extérieur du boitier de climatisation et de chauffage.

Selon un autre mode de réalisation, le boîtier de climatisation et de chauffage comprend en outre un aérotherme pour chauffer la branche chaude.

Selon un autre mode de réalisation, l'évaporateur du boîtier de climatisation et de chauffage est couplé à un condenseur, et dans lequel le sécheur du boîtier de climatisation et de chauffage est localisé dans la branche chaude.

Selon un autre mode de réalisation, le moyen de régénération du sécheur est choisi parmi une résistance électrique intégrée dans le sécheur ou le matériau du sécheur, une résistance électrique intégrée en amont du sécheur, une résistance de type CTP, l'aérotherme, le condenseur.

Selon un autre mode de réalisation, le sécheur du boîtier de climatisation et de chauffage est couplé à un filtre à gaz.

Selon un autre mode de réalisation, le système de climatisation comprend au moins un moyen de mesure parmi un capteur d'hygrométrie, un capteur de température, un capteur de CO2, et un détecteur du nombre de passagers du véhicule.

Selon un autre mode de réalisation, le calculateur est relié audit au moins un moyen de mesure pour déterminer le taux de recyclage de l'air.

Selon un autre mode de réalisation, le calculateur est capable de déterminer lorsque le matériau du sécheur est saturé au moyen dudit au moins un moyen de mesure, et peut ordonner l'activation du moyen de régénération du sécheur.

L'invention porte également sur un procédé de commande d'une climatisation pour véhicule comprenant
- une étape de détermination du taux de recyclage de l'air par le calculateur,
- une étape de chauffage et de désorption du matériau adsorbant et de l'eau qu'il contient, et
- une étape de pilotage du volet du sécheur pour doser la quantité d'air traversant le sécheur.

Selon un mode de mise en oeuvre du procédé, l'étape de détermination du taux de recyclage de l'air par le calculateur est réalisée au moyen d'au moins un moyen de mesure parmi un capteur d'hygrométrie, un capteur de température, un capteur de CO2, et un détecteur du nombre de passagers du véhicule.

L'étape de chauffage et de désorption du matériau adsorbant et de l'eau qu'il contient peut être mise en oeuvre par le moyen de régénération du sécheur, sur requête émise par le calculateur.

L'invention porte aussi sur un véhicule automobile comprenant un système de climatisation tel que défini précédemment.

D'autres buts, avantages et caractéristiques de l'invention apparaîtront à la lecture de la description détaillée d'un mode de réalisation de l'invention, non limitatif, illustré sur les dessins annexés, dans lesquels :
- la figure 1 illustre un système de climatisation avec un conduit de dérivation et comprenant un sécheur dans la branche de recyclage d'air,
- la figure 2 illustre un système de climatisation sans conduit de dérivation et comprenant un sécheur dans la branche de recyclage d'air,
- la figure 3 illustre un système de climatisation avec un conduit de dérivation et comprenant un sécheur dans la branche air-extérieur,
- la figure 4 illustre un système de climatisation sans conduit de dérivation et comprenant un sécheur dans la branche air-extérieur,
- la figure 5 illustre différentes positions d'un sécheur dans la branche commune air recyclé - air neuf extérieur du système de climatisation,
- la figure 6 est un schéma d'un sécheur installé en parallèle avec un filtre à air dans un boitier indépendant dans l'habitacle du véhicule,
- la figure 7 est un schéma d'un boitier indépendant un sécheur installé en amont d'un filtre à gaz dans un boitier indépendant dans l'habitacle du véhicule,
- la figure 8 illustre un système de climatisation dans lequel l'échangeur évaporateur est également associé à une fonction condenseur, et
- la figure 9 est un schéma d'un sécheur couplé à un filtre à gaz.

L'invention concerne un système de climatisation 1 avec un séchage de l'air par adsorption au moyen d'un matériau adsorbant de type zéolite, gel de silice, ou MOF.

Ce système est régénérable par désorption en réchauffant le matériau adsorbant et l'eau qu'il contient.

L'invention est principalement dédiée aux véhicules électriques dans le but de gagner en consommation mais trouve aussi une application avantageuse dans les phases de démarrage des véhicules thermiques, et plus généralement à tout type de véhicule dans le but de réduire les risques d'embuage.

Le sécheur 2 peut être utilisé lorsque l'augmentation du recyclage d'air est limitée par le risque d'embuage jusqu'à atteindre une limite imposée par le taux de CO2 dans l'habitacle, afin d'optimiser le recyclage partiel de l'air habitacle pour réduire la consommation des véhicules électrifiés en mode chauffage et augmenter leur autonomie.

Selon un mode de réalisation, le sécheur 2 est utilisé lorsque les risques d'embuage apparaissent.

Le sécheur 2 peut aussi être utilisé au démarrage du mode chauffage avec l'échangeur 3 chaud. On peut avantageusement prévoir de n'utiliser qu'un seul échangeur 3 chaud et froid afin de gagner en encombrement, coût et poids sur les véhicules, notamment sur les véhicules électrifiés, équipés d'un système réversible de type climatisation - pompe à chaleur.

Dans ces différentes utilisations, le séchage, par sa réaction exothermique, fournit un réchauffage « gratuit » de l'air et augmente les performances du mode chauffage du système de climatisation 1.

Les moyens de régulation qui peuvent être utilisés comportent des moyens de détection comprenant :
- un capteur d'hygrométrie qui permet de fournir une information sur le risque d'embuage des vitres,
- un capteur de température d'air habitacle et/ou un capteur de température des vitres qui permet avec le capteur d'hygrométrie de fournir une information sur le risque d'embuage des vitres,
- un capteur de CO2 qui permet de fournir une information sur le besoin de renouveler l'air et d'augmenter le taux d'oxygène, et
- un détecteur du nombre de passagers qui permet de fournir une estimation de la production d'humidité et de CO2 engendrée par les occupants dans l'habitacle.

Les moyens de régulations comprennent également des actionneurs comportant :
- un volet de recyclage 4 de l'air qui permet de doser le débit d'air qui provient de l'extérieur. Le complément du débit d'air est de l'air recyclé de l'habitacle,
- un volet de pilotage 5 du sécheur 2 qui permet de doser le débit d'air qui traverse le sécheur 2. Le complément du débit circulant dans la branche contourne le sécheur 2,
- un volet utilisé dans le mode régénération du sécheur 2 et qui permet d'évacuer le débit d'air de régénération,
- un moyen de régénération 7 utilisé dans le mode régénération et qui permet de chauffer et désorber le sécheur 2 et l'eau qu'il contient,
- des composants connus, tels que le pulseur 8, le système de chauffage et le système de refroidissement.

En outre, un calculateur dûment programmé assure la commande de ces actionneurs, en en particulier à partir d'un taux de recyclage.

La présente invention permet d'ajuster le débit d'air traversant le sécheur 2 afin de préserver son autonomie en fonction du besoin et de répondre au besoin de réduction de l'hygrométrie de l'air qui peut être de prévenir l'embuage. Elle permet également d'optimiser le recyclage d'air sans risque d'embuage pour réduire la consommation en mode chauffage ou bien de prendre en charge les condensats évaporés par un échangeur évaporateur utilisé comme un condenseur, ou évapo-condenseur, en mode chauffage. Elle permet encore d'ajuster le débit d'air neuf en provenance de l'extérieur afin de régénérer l'air dans l'habitacle en fonction du nombre d'occupants ou du taux de CO2.

Le pilotage peut être couplé à l'optimisation de la qualité de l'air dans l'habitacle, par exemple en pilotant le débit d'air neuf extérieur en fonction de la pollution dans l'environnement extérieur tout en assurant dans la durée l'oxygénation souhaitée dans l'habitacle.

L'optimisation du recyclage partiel grâce au sécheur permet avantageusement de limiter le débit d'air extérieur, et de limiter l'entrée de la pollution en gaz ou en particule venant de l'extérieur. Le débit d'air neuf peut ainsi avantageusement être piloté en fonction de l'état de la pollution extérieure grâce à une information provenant d'un capteur de pollution extérieur, ou bien d'une cartographie de la pollution extérieure.

La régénération est mise en oeuvre lorsque la performance du sécheur 2 diminue à un faible niveau qui justifie la régénération. On peut mesurer la quantité d'eau introduite dans le sécheur 2 à partir des relevés de températures et hygrométrie en amont et en aval du sécheur 2.

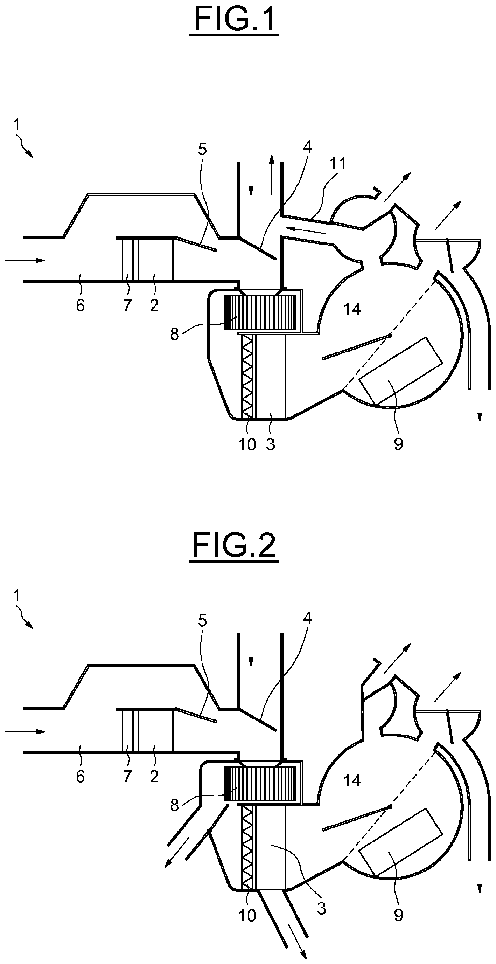

Le système de climatisation illustré dans les figures 1 à 9 comporte un seul sécheur 2 monobloc et non mobile.

Le sécheur 2 est équipé d'un volet permettant de doser la quantité d'air qui doit traverser le sécheur 2 afin de satisfaire l'objectif de niveau d'hygrométrie recherché dans l'habitacle et sur les vitres. Le complément du volume d'air est détourné pour contourner le sécheur 2.

Ce volet peut être piloté en progressif pour obtenir une position optimale ou bien il peut être piloté en on/off c'est-à-dire en alternance ouvert/fermé en privilégiant l'une ou l'autre des deux positions pour obtenir la quantité moyenne de séchage optimale recherchée.

Le pilotage du volet permet de retenir dans le sécheur 2 la quantité d'eau juste nécessaire pour l'objectif recherché et ainsi de sauvegarder la longévité du sécheur 2 avant qu'il soit saturé et qu'il ne devienne inopérant pour sécher l'air. Il permet également de limiter avantageusement la perte de charge aéraulique et la consommation liées à l'utilisation du sécheur 2.

Par ailleurs, dans les phases où le sécheur 2 ne doit pas être utilisé, parce qu'il n'y a pas de risque d'embuage, ou que le mode climatisation est activé, la totalité du débit de la branche contourne le sécheur 2.

La phase de régénération est de préférence réalisée pendant une période de stationnement en parking du véhicule et notamment lorsqu'il est connecté à une borne électrique afin de bénéficier de l'énergie électrique disponible. Les véhicules que l'on peut connecter au réseau électrique fixe, de type véhicules électriques, véhicules hybrides, ou véhicules thermiques connectables, sont particulièrement adaptés.

La régénération peut, si nécessaire, être réalisée pendant le roulage du véhicule bien qu'elle soit dans ces conditions susceptible de gêner le confort thermique dans l'habitacle.

La régénération est réalisée en chauffant le matériau. Le moyen de régénération 7 peut être réalisé de différentes façons au moyen d'une résistance électrique intégrée dans le sécheur 2 ou le matériau du sécheur 2, ou d'une résistance électrique, par exemple de type CTP, intégrée dans la branche d'air juste en amont du sécheur 2 si on considère le sens de circulation de l'air en mode régénération du sécheur 2. Le moyen de chauffage réchauffe l'air qui traverse le sécheur 2 en évaporant l'eau et en la transportant.

Un moyen de régénération 7 déjà existant tel qu'un aérotherme 9, un condenseur de pompe à chaleur, une résistance électrique peut avantageusement être mis à profit pour régénérer le matériau adsorbant du sécheur 2.

Pendant la régénération du sécheur 2, l'air qui alimente le sécheur 2 peut provenir de l'habitacle par la branche de recyclage d'air 6, ou de l'extérieur par la branche d'entrée d'air extérieure.

Pendant le mode régénération du sécheur 2, l'air qui le traverse transporte l'eau et peut ensuite être évacué vers l'extérieur à contre sens dans l'entrée d'air grâce à un conduit de dérivation 11 aménagé dans le boitier de climatisation - chauffage et qui relie la zone de distribution d'air vers le pare-brise et la zone d'entrée d'air extérieur. Le volet utilisé peut alors être issu du volet de distribution d'air vers le pare-brise aménagé pour permettre une orientation de l'air vers l'entrée d'air extérieur durant le mode régénération.

Il peut aussi être évacué vers l'extérieur par une sortie ajoutée dans le boitier et dédiée au mode régénération. Un volet également ajoutée permet l'orientation de l'air vers cette sortie.

Il peut aussi être évacué vers l'extérieur par la sortie existante située sous l'évaporateur et utilisée habituellement pour évacuer les condensats générés pendant le mode de production de froid de l'évaporateur. Dans ce cas, les volets de distribution peuvent permettre de bloquer le passage de l'air vers l'habitacle et de forcer le passager à travers l'orifice de passage des condensats.

Dans un autre mode de réalisation, l'air est évacué vers l'habitacle.

Le sécheur 2 est dimensionné en fonction de l'utilisation recherchée, de sa performance et de son autonomie.

L'autonomie du sécheur 2 pourrait être similaire à celle d'une batterie sur un véhicule électrifié afin de bénéficier de la période de recharge de la batterie pour régénérer le sécheur 2.

Elle peut aussi se limiter à un trajet véhicule.

La présence du sécheur 2 peut permettre de gagner en consommation énergétique du mode chauffage et diminuer le dimensionnement du système de chauffage ou du chauffage d'appoint d'un véhicule thermique, par exemple, d'une résistance électrique et ainsi de gagner en coût.

La figure 1 représente une disposition dans laquelle le sécheur 2 est intégré dans la branche de recyclage de l'air.

En fonction du nombre d'occupants dans l'habitacle, le calculateur détermine le taux de recyclage de l'air c'est-à-dire la quantité minimale nécessaire pour limiter le taux de CO2 ou bien pour limiter l'hygrométrie dans l'habitacle et sur les vitres, et détermine ainsi la quantité d'air qui peut être recyclé de l'habitacle permettant ainsi de limiter la consommation du système de climatisation - chauffage 1 ou bien d'éviter les risques d'embuage dans l'habitacle.

Dans cette configuration, seule la partie du débit d'air recyclé en provenance de l'habitacle peut traverser le sécheur 2.

Le sécheur 2 est équipé d'un volet pilotable par le calculateur et permettant de doser la quantité d'air qui traverse le sécheur 2 afin de satisfaire l'objectif de niveau d'hygrométrie recherché dans l'habitacle et sur les vitres. Le complément du volume d'air est détourné pour contourner le sécheur 2.

Ce volet peut être piloté de manière progressive pour obtenir une position optimale ou bien il peut être piloté de manière binaire c'est-à-dire en alternance ouvert/fermé en privilégiant l'une ou l'autre des deux positions pour obtenir la quantité moyenne de séchage optimale recherchée.

Ce pilotage du volet permet de retenir dans le sécheur 2 la quantité d'eau juste nécessaire pour l'objectif recherché et ainsi de sauvegarder la longévité du sécheur 2 avant qu'il soit saturé et qu'il ne devienne inopérant pour sécher l'air. Il permet également de limiter la perte de charge aéraulique et la consommation liées à l'utilisation du sécheur 2.

Par ailleurs, dans les phases où le sécheur 2 ne doit pas être utilisé la totalité du débit de la branche contourne le sécheur 2.

Le moment opportun pour régénérer le sécheur 2 peut être déterminé à partir de la performance du sécheur 2. En effet, lorsque l'effet du sécheur 2 sur l'hygrométrie dans l'habitacle devient faible et insuffisant malgré le flux d'air qui traverse le sécheur 2, le calculateur fournit une information de besoin de régénérer le sécheur 2 dès que possible.

Le dimensionnement du sécheur 2 détermine sa performance de séchage et sa durée de vie avant régénération.

La régénération peut être réalisée pendant un arrêt en parking du véhicule notamment lorsque le véhicule est connecté à un réseau électrique stationnaire, par exemple pour recharger une batterie.

Elle peut également être envisagée pendant une phase de roulage.

Sur la figure 1, le volet de recyclage 4 est fermé permettant alors au pulseur 8 d'aspirer uniquement de l'air de l'habitacle.

Le niveau de puissance du pulseur 8 est ajusté pour optimiser le débit d'air traversant le sécheur 2 ainsi que sa régénération.

Le volet de pilotage 5 du sécheur 2 est dans la position permettant à tout le débit d'air de traverser le sécheur 2.

La résistance électrique en amont du sécheur 2 permet de chauffer à une température optimale.

Dans une variante, la résistance électrique est intégrée dans le sécheur 2 permettant alors de chauffer directement le matériau et son volume d'eau.

L'air, en traversant le sécheur 2, se charge en humidité puis traverse le pulseur 8 puis le filtre et l'évaporateur puis rejoint la zone des volets de distribution d'air. Les volets de distribution d'air sont dans une position qui interdit le passage de l'air vers les différentes sorties vers l'habitacle et autorise le passage dans un conduit de dérivation 11 aménagé spécialement pour le mode régénération et reliant l'amont du volet de distribution d'air vers le pare-brise à la zone d'entrée d'air extérieur.

Dans d'autres variantes, ce conduit de dérivation 11 pourrait relier n'importe quel point en aval du pulseur 8 à la zone d'entrée d'air extérieur.

Le volet de recyclage 4 étant en position fermée, l'air humide est alors renvoyé vers l'extérieur à contre sens de l'utilisation habituelle d'aspiration d'air extérieur.

L'implantation du sécheur 2 dans la branche de recyclage d'air 6 permet avantageusement d'atténuer les variations de niveau de bruit dans l'habitacle liées à l'utilisation du recyclage de l'air de l'habitacle et au contact aérien direct entre le pulseur 8 et l'habitacle, et de réduire les risques de passage direct d'air de l'extérieur vers l'habitacle liés à la vitesse du véhicule et à l'équilibre des pressions.

La figure 2 est une variante avec, en remplacement du conduit de dérivation 11, une sortie d'air vers l'extérieur et son volet aménagés spécifiquement pour le mode régénération.

Dans ce cas, le volet de recyclage 4 peut avoir une position quelconque et l'air peut provenir de l'extérieur ou bien de l'habitacle.

En mode régénération, le volet de la sortie d'air s'ouvre et interdit le passage vers l'évaporateur.

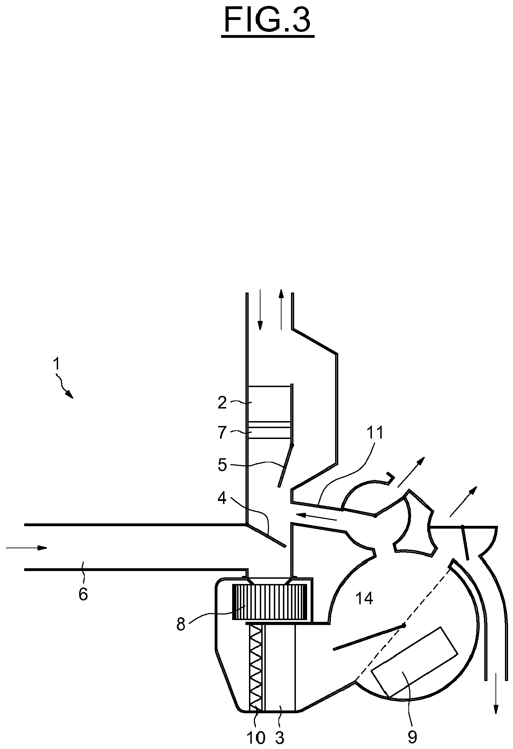

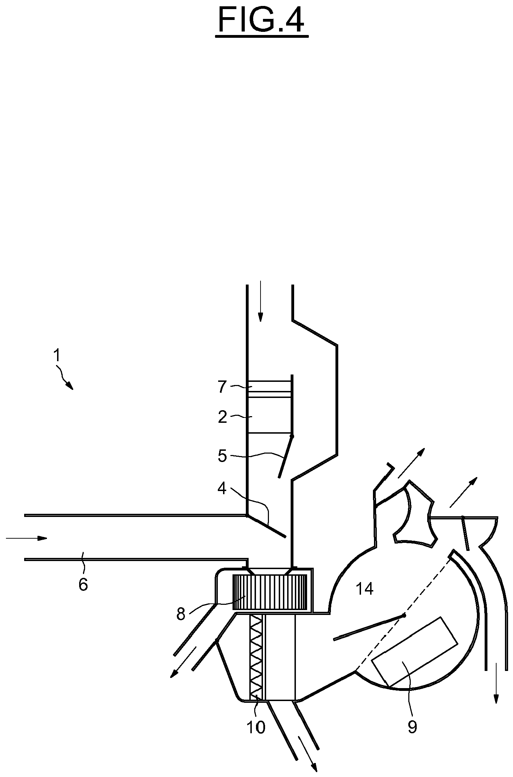

On a représenté des variantes aux modes de réalisation des figures 1 et 2 dans les figures 3 et 4 où le sécheur 2 est implanté dans la branche d'entrée d'air extérieur.

Dans la figure 3, la résistance électrique qui est utilisée pendant la phase de régénération peut également être utilisée en mode chauffage comme appoint au système de chauffage. Cette résistance électrique peut également être localisée dans le conduit de dérivation 11. Elle peut également se situer dans le boitier indépendant 12 et être utilisée comme système de chauffage d'une part et comme moyen de régénération du sécheur 2 d'autre part.

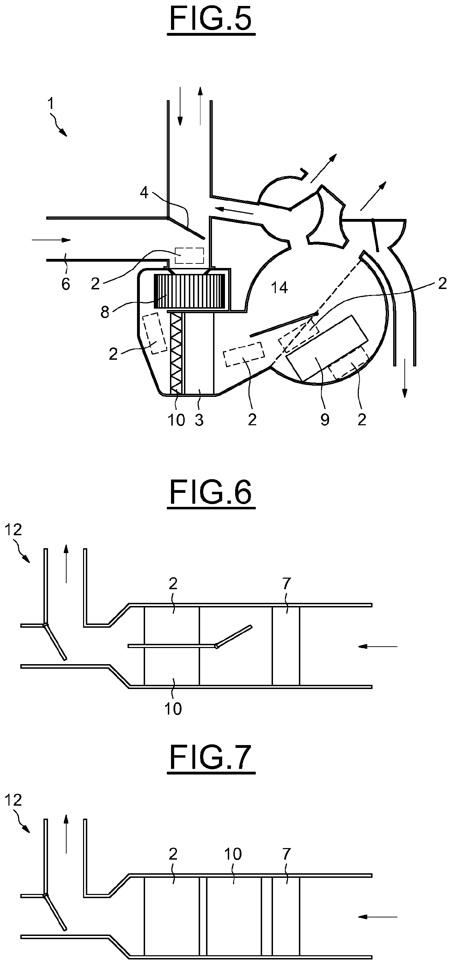

La figure 5 représente plusieurs localisations possibles du sécheur 2 en aval du volet de recyclage 4 d'air.

Le séchage illustré en figure 5 est composé d'un seul sécheur 2 monobloc et est non mobile.

On peut en effet également considérer un système décomposé en 2 parties avec une partie active pour sécher l'air et l'autre partie en mode régénération. La phase suivante consiste alors à inverser les fonctionnements en utilisant la partie régénérée pour sécher l'air et en régénérant l'autre partie. Le changement de phase peut être réalisé avec un système mobile, par exemple en rotation, ou bien en croisant les circuits aérauliques.

Le pulseur 8 est de préférence situé en amont comme illustré sur la figure 5. Il peut être également double, afin d'alimenter de façon indépendante les deux parties du séchage. La partie du sécheur 2 en cours de régénération avec son système de chauffage électrique peut être alimentée en air recyclé ou en air extérieur et l'air humidifié en sortie est rejetée vers l'extérieur par une sortie située juste en aval.

Les phases de séchage et de régénération sont obtenues par la commande des volets amont et aval du séchage.

Dans un autre mode de réalisation, on peut prévoir un système de cartouche amovible interchangeable. Cette solution a l'avantage de supprimer la phase de régénération qui n'est pas réalisée dans le véhicule. Elle peut permettre de sous-dimensionner le sécheur 2 en effectuant le changement plus souvent. La cartouche peut être jetable ou être régénérée hors du véhicule par l'utilisateur ou être régénérée en magasin.

Les figures 6 et 7 représentent le sécheur 2 implanté dans un boitier indépendant 12 localisé dans l'habitacle. De préférence, un système de filtration de l'air habitacle est également implanté dans ce boitier.

Sur la figure 6 le sécheur 2 est dans une branche parallèle à celle du traitement de l'air.

Dans la figure 7, le sécheur 2 est en aval du traitement de l'air.

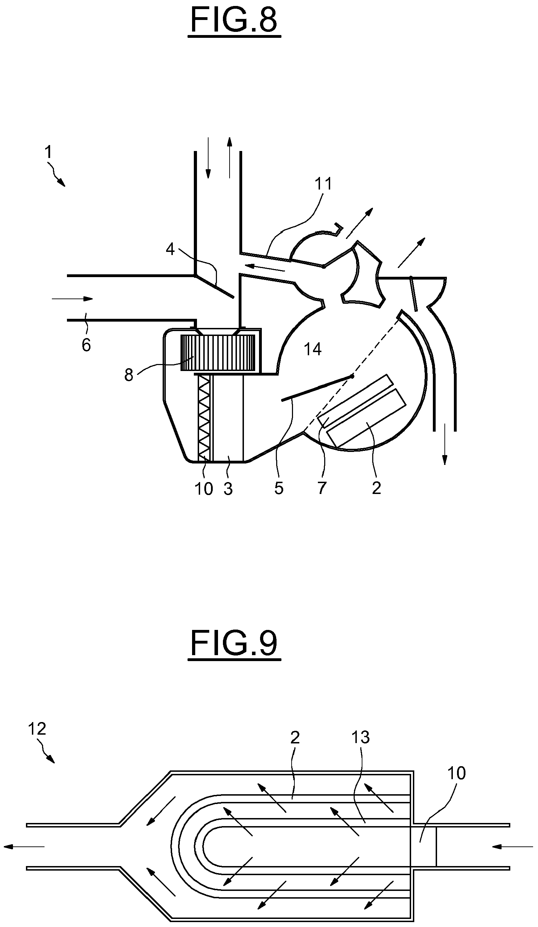

L'invention porte également sur un véhicule équipé d'un échangeur 3, ou évaporateur, produisant du froid ou de la chaleur par exemple avec un système de climatisation- pompe à chaleur 1 comme on le voit sur la figure 8. Le sécheur 2 est implanté en aval de l'échangeur 3 à double fonction, en lieu et place de l'échangeur de chaleur indépendant.

Lorsque le mode chauffage est mis en route après un cycle d'utilisation du mode climatisation, les condensats piégés sur la surface de l'échangeur 3 s'évaporent. Le sécheur 2 permet avantageusement de les retenir et d'éviter d'embuer les vitres de l'habitacle.

Le volet de mixage est utilisé comme volet de pilotage 5 du sécheur 2 pour ajuster la proportion du débit d'air traversant le sécheur 2.

Lorsque l'échangeur 3 est sec et ne rejette plus de vapeur d'eau, le volet peut être fermé et autoriser la totalité du débit d'air à contourner le sécheur 2.

Si l'on souhaite régénérer le sécheur 2 durant le mode chauffage, le volet peut s'ouvrir partiellement pour laisser une quantité d'air chaud traverser le sécheur 2. Une résistance électrique peut être placée en amont du sécheur 2, ou intégrée dans celui-ci, pour augmenter la température de cet air. Le débit d'air humidifié est ajusté en fonction de l'hygrométrie dans l'habitacle et près des vitres afin d'éviter l'embuage.

Le conduit de dérivation entre la zone de répartition d'air et l'entrée d'air extérieur peut éventuellement être ajouté afin de rejeter le débit d'air humidifié pendant la phase de régénération.

La figure 9 représente le couplage dans un seul composant des fonctions filtration d'air et séchage d'air. Le système de traitement d'air peut être issu de technologie adaptée, comme par exemple un plasma couplé à un filtre adsorbant 13.

Dans certaines dispositions, la présence du sécheur 2 et de son système de régénération permettent d'envisager la régénération du filtre à gaz 10 pour avantageusement augmenter la durée de vie du filtre ainsi que ses performances d'abattement des gaz. Ceci est possible lorsque la source de chaleur permettant la régénération du sécheur 2 est située en amont du filtre à gaz 10. Une variante consiste à disposer d'un filtre intégrant une résistance électrique interne afin de le réchauffer pendant la phase de régénération.

Le séchage de l'évaporateur permet de limiter les odeurs liées au développement de micro-organismes à la surface de l'échangeur 3. Ceci peut être réalisé grâce à l'air séché en amont de l'évaporateur ou bien grâce à la source de chaleur utilisée en mode régénération du sécheur 2 lorsqu'elle est située en amont de l'évaporateur telle qu'illustrée suer la figure 5.

Comme on le conçoit, l'invention qui vient d'être décrite permet d'assurer la régénération du sécheur 2 avec réchauffage et rejet vers l'extérieur de l'air humidifié sans perturber l'utilisation du véhicule.

Par ailleurs, la fonction séchage peut être pilotée et ne pas être utilisée dans certains modes d'utilisation par exemple lorsque l'on utilise la climatisation pour refroidir l'habitacle.

Enfin, la fonction séchage peut être pilotée au plus juste afin d'optimiser son efficacité pour répondre aux objectifs et optimiser son autonomie.

En plus des avantages liés à la réduction de la consommation, la diminution des risques d'embuage et la possibilité d'un échangeur 3 unique de génération de froid et de chaleur, l'invention permet d'atténuer les variations de niveau de bruit dans l'habitacle liées à l'utilisation du recyclage de l'air de l'habitacle et au contact aérien direct entre le pulseur 8 et l'habitacle.

L'invention permet de réduire les risques de passage direct d'air de l'extérieur vers l'habitacle liés à la vitesse du véhicule et à l'équilibre des pressions.

Avantageusement, le sécheur 2 permet l'accélération de la mise au confort au démarrage véhicule en mode chauffage.

Le couplage du sécheur 2 avec le système de filtration de l'air illustré par la figure 9 permet aussi, avantageusement, de régénérer le filtre à gaz 10 et ainsi d'augmenter la durée de vie du filtre ainsi que ses performances d'abattement des gaz.

Le séchage de l'évaporateur, du filtre et des conduits d'air permettant ainsi avantageusement de lutter contre les odeurs liées au développement de micro-organismes à la surface de ces composants.

## Revendications

1. Système de climatisation (1) pour véhicule automobile, comprenant
un calculateur capable de déterminer un taux de recyclage, un boîtier de climatisation et de chauffage comprenant des moyens de contrôle et de pilotage de l'état de l'air dans l'habitacle, **caractérisé en ce qu'**il comprend
un sécheur (2) comprenant un matériau adsorbant régénérable, un volet permettant de doser la quantité d'air traversant le sécheur (2), et au moins un moyen de régénération (7) pour chauffer et désorber le matériau adsorbant et l'eau qu'il contient,
et **en ce que** le volet du sécheur (2) peut être piloté par le calculateur.

2. Système de climatisation (1) selon la revendication 1, dans lequel les moyens de contrôle et de pilotage de l'état de l'air dans l'habitacle comprennent
un volet de recyclage (4) d'air apte à doser le débit d'air provenant de l'extérieur, piloté par le calculateur,
une branche de recyclage d'air (6) conduisant l'air en amont du volet de recyclage (4) d'air,
une branche d'entrée d'air neuf extérieur conduisant l'air en amont du volet de recyclage (4),
une branche commune air recyclé - air neuf extérieur (14) conduisant l'air en aval du volet de recyclage (4) et en amont des ouvertures pratiquées dans l'habitacle du véhicule,
une branche chaude en communication fluidique avec la branche commune air recyclé - air neuf extérieur (14) au moyen d'une ouverture pratiquée à l'interface avec celle-ci,
un volet de mixage capable d'obturer partiellement ou totalement l'ouverture pratiquée entre la branche commune air recyclé - air neuf extérieur (14) et la branche chaude,
un pulseur (8) dans la branche commune air recyclé - air neuf extérieur (14), et
un évaporateur dans la zone commune air recyclé-air neuf extérieur.

3. Système de climatisation selon la revendication 2, dans lequel le boîtier de climatisation et de chauffage comprend un conduit de dérivation (11) reliant un point en aval du pulseur (8) à la zone d'entrée d'air extérieur.

4. Système de climatisation selon la revendication 2, dans lequel le boîtier de climatisation et de chauffage comprend un conduit de dérivation reliant un point en aval du pulseur à une sortie directe vers l'extérieur.

5. Système de climatisation selon la revendication 2, dans lequel le boîtier de climatisation et de chauffage utilise comme conduit de dérivation vers l'extérieur la sortie existante située sous l'échangeur évaporateur et qui renvoie les condensats vers l'extérieur.

6. Système de climatisation selon l'une quelconque des revendications 3, 4 et 5, dans lequel le boîtier de climatisation et de chauffage comprend un conduit de dérivation (11) reliant l'amont du volet de distribution d'air vers le pare-brise du véhicule à la zone d'entrée d'air extérieur.

7. Système de climatisation selon l'une quelconque des revendications 1 à 6, dans lequel le sécheur (2) est intégré dans la branche de recyclage d'air (6) du boîtier de climatisation et de chauffage.

8. Système de climatisation selon l'une quelconque des revendications 3 à 6 dans lequel le sécheur (2) est intégré dans la branche d'entrée d'air neuf extérieur du boîtier de climatisation et de chauffage.

9. Système de climatisation selon l'une quelconque des revendications 3 à 6 dans lequel le sécheur (2) est situé dans la branche commune air recyclé - air neuf extérieur (14) du boîtier de climatisation et de chauffage.

10. Système de climatisation selon l'une quelconque des revendications 2 à 9, dans lequel le boîtier de climatisation et de chauffage comprend en outre un aérotherme (9) pour chauffer la branche chaude.

11. Système de climatisation selon l'une quelconque des revendications 2 à 6, dans lequel l'évaporateur du boîtier de climatisation et de chauffage est couplé à un condenseur, et dans lequel le sécheur (2) du boîtier de climatisation et de chauffage est localisé dans la branche chaude.

12. Système de climatisation selon la revendication 11, dans lequel le moyen de régénération (7) du sécheur (2) est choisi parmi une résistance électrique intégrée dans le sécheur (2) ou le matériau du sécheur (2), une résistance électrique intégrée en amont du sécheur (2), une résistance de type CTP, l'aérotherme (9), ou le condenseur.

13. Système de climatisation selon l'une quelconque des revendications 1 à 12, dans lequel le sécheur (2) du boîtier de climatisation et de chauffage est couplé à un filtre à gaz (10).

14. Système de climatisation selon l'une quelconque des revendications 1 à 13, comprenant au moins un moyen de mesure choisi parmi un capteur d'hygrométrie, un capteur de température, un capteur de CO2, et un détecteur du nombre de passagers du véhicule.

15. Système de climatisation selon la revendication 14, dans lequel le calculateur est relié audit au moins un moyen de mesure pour déterminer le taux de recyclage de l'air.

16. Système de climatisation selon l'une quelconque des revendications 14 et 15, dans lequel le calculateur est capable de déterminer lorsque le matériau du sécheur (2) est saturé au moyen dudit au moins un moyen de mesure, et d'ordonner l'activation du moyen de régénération (7) du sécheur (2).

17. Procédé de commande d'un système de climatisation selon l'une quelconque des revendications 1 à 16, **caractérisé en ce qu'**il comprend
une étape de détermination du taux de recyclage de l'air par le calculateur,
une étape de chauffage et de désorption du matériau adsorbant et de l'eau qu'il contient, et
une étape de pilotage du volet du sécheur (2) pour doser la quantité d'air traversant le sécheur (2).

18. Procédé de commande selon la revendication 17, dans lequel l'étape de détermination du taux de recyclage de l'air par le calculateur est réalisée au moyen d'au moins un moyen de mesure choisi parmi un capteur d'hygrométrie, un capteur de température, un capteur de CO2, et un détecteur du nombre de passagers du véhicule.

19. Procédé de commande selon les revendications 17 et 18, dans lequel l'étape de chauffage et de désorption du matériau adsorbant et de l'eau qu'il contient est mise en oeuvre par le moyen de régénération (7) du sécheur (2), sur requête émise par le calculateur.

20. Véhicule automobile comprenant un système de climatisation selon l'une quelconque des revendications 1 à 19.
